# EUROPEAN PATENT SPECIFICATION

(11) **EP 0 745 568 B1**
(45) Date of publication and mention of the grant of the patent: **28.07.1999**
(21) Application number: 96107844.1
(22) Date of filing: 17.05.1996
(51) Int. Cl.: C03C 17/30, C09K 3/18

(54) **Autophobic water repellent surface treatment**
Autophobe wasserabweisende Oberflächenbehandlung
Traitement de surface hydrofuge autophobique

(30) Priority: 01.06.1995 US 458149
(43) Date of publication of application: 04.12.1996
(73) Proprietor: PPG Industries Ohio, Inc., Cleveland, OH 44111 (US)
(72) Inventor: Goodwin, George B., Cranberry Township, PA 16066 (US)
(74) Representative: Sternagel, Hans-Günther, Dr.

(56) References cited:
- EP-A- 0 492 545
- US-A- 5 368 892

## Description

The present invention relates generally to the art of surface treatment and, more particularly, to the art of producing a water repellent surface on various substrates, and most particularly to producing such a water repellent surface without applying excess material which must be removed.

US-A-4,724,022 to Armstrong discloses an improved method of preparing a glass release surface useful in the manufacture of anti-lacerative window assemblies by treating the glass surface with (heptadecafluoro-1,1,2,2-tetrahydrodecyl)-1-trichlorosilane.

EP-A-0513690 of Yoneda et al. describes a surface-treated substrate having at least two treated surface layers wherein the first outermost layer is obtained by treatment with a compound forming a surface having a contact angle of at least 70° against water and the second underlayer is obtained by treatment with at least one reactive silane compound selected from isocyanate silane compounds and hydrolyzable silane compounds.

US-A-4,983,459 and 4,997,684 to Franz et al. disclose an article and method respectively for providing a durable nonwetting surface on glass by treatment with a perfluoroalkylalkyl silane and a fluorinated olefin telomer.

US-A-5,308,705 to Franz et al. describe providing nonwetting surface properties to substrates other than glass by treatment with a perfluoroalkylalkyl silane and a fluorinated olefin telomer.

US-A-5,328,768 to Goodwin discloses a glass substrate the surface of which is treated with first a silica primer layer and second a perfluoroalkylalkyl silane.

US-A-5,368,892 to a non-wettable glass sheet comprising a hydrophobic, oleophobic layer and a process for manufacturing the same. The cleaned glass surface is contacted with a solution containing a fluorinated organosilane in a non-polar solvent system for at least 5 minutes and rinsing. The fluorinated organosilanes correspond to the general formula x₃Si-[Cₙ₊ₘH₂ₙF₂ₘ]-CF₃ wherein (n+m) is equal or greater than 5, x is a hydrolyzable functional group, preferably halogen. The solvent is composed of a least 80 vol% of one or more polar solvent(s) and 20 vol% or less of one or more chlorinated solvent(s). Non-polar solvents are n-hexadecane or isoactane. Chlorinated solvents are selected from dichloromethane, trichloromethane, trichloroethane, trichloroethylene, trichloro-trifluoroethane, carbon tetrachloride and mixtures thereof.

From EP-A-492 545 transparent substrates are known having on the surface a monomolecule film formed with chemical coupling of a silane or alkoxy silane of the formula F(CF₂)ₘ(CH₂)ₙSiR_{q}X₃₋₉ wherein m is an integer from 1-15, n is an integer from 0-15, the sum of n and m is from 10-30, q is an integer from 0-2; R is an alkyl or an alkoxy group and x is halogen or an alkoxy group; or of the formula F(CF₂)_{m'}(CH₂)_{n'}A(CH₂)ₚSiR_{q}X₃₋₉ wherein m' is an integer from 1-8, n' is an integer from 0-2, p is an integer from 2-25, q is an integer from 0-2, x is halogen or an alkoxy group, R is an alkyl or alkoxy group and A is -O-, -COO- or -Si(CH₃)₂ with the surface of the substrate to provide hydrophobic, oil-phobic and/or contamination-free behavior.

It is the object of the invention to provide a method of making surfaces of substrates highly water repellent.

This object is attained by a method of producing a non-wetting surface on a substrate by contacting at ambient temperature the surface with a composition comprising:
(i) a perfluoroalkylalkyl silane selected from compounds having the general formula RₘR'ₙSiX₄₋ₘ₋ₙ, wherein R is a perfluoroalkylalkyl radical, R' is an alkyl or vinyl radical, m is 1, n is 0 or 1, m+n is not greater than 3, and X is selected from the group consisting of halogen, alkoxy and acyloxy radicals, and
(ii) at least one aprotic solvent having a surface tension at least 5.10⁻⁵ N (5 dynes) per centimeter higher than the surface free energy of the perfluoroalkylalkyl silane treated substrate surface and a boiling point of at least 65°C and the solvent is selected from the group consisting of alkanes, alkenes, aromatic hydrocarbons, ethers, ketones, halogenated hydrocarbons, perfluorocarbons or mixtures thereof, and the solvent or one component of a solvent mixture at least one percent in concentration is of sufficiently high boiling point so as not to evaporate within about one minute after application of the composition,
until the treated surface becomes sufficiently non-wetting to repel the remaining composition and removing an excess of the composition and evaporating any remaining solvent.

The method of the present invention provides a substrate surface with high water repellency and high lubricity. Durable water and dirt repellency of a substrate surface are provided by applying to the substrate surface a composition comprising a perfluoroalkylalkyl silane compound and an aprotic solvent which renders the surface treatment autophobic, i.e. the composition initially wets the substrate surface, and as the substrate surface becomes treated with the perfluoroalkylalkyl silane, the composition is repelled by the treated substrate surface. The composition comprises at least one aprotic solvent having a boiling point sufficiently high to prevent complete evaporation of solvent upon application of the perfluoroalkylalkyl silane, and a surface tension at least 5.10⁻⁵ N (5 dynes) per centimeter higher than the surface free energy of the perfluoroalkylalkyl silane treated substrate surface. The composition may comprise a single solvent or a mixture of solvents.

### DESCRIPTION OF THE PREFERRED EMBODIMENT

A composition comprising perfluoroalkylalkyl silane and solvent is applied to the surface of a substrate to produce a surface treatment article. The perfluoroalkylalkyl silane and solvent composition is preferably employed as a suspension or solution, preferably in a solvent for the perfluoroalkylalkyl silane. The solution is applied to a substrate surface by any conventional technique such as dipping, flowing, wiping or spraying. The composition initially wets the surface, usually for about 0.2 to 2 seconds until the treated surface becomes sufficiently nonwetting to repel the remaining composition. As the perfluoroalkylalkyl silane reacts with the surface, and the treated surface repels the remaining composition, any excess composition can be easily removed, for example by wiping, without deposition of any excess silane as a thin hazy film which is difficult to remove and requires significant effort to eliminate.

The used perfluoroalkylalkyl silanes have the general formula RₘR'ₙSiX₄₋ₘ₋ₙ, wherein R is a perfluoroalkylalkyl radical; m is one, n is zero or one, and m+n is not greater than 3; R' is a vinyl or alkyl radical, preferably methyl, ethyl or propyl; and X is preferably a radical such as halogen, acyloxy, and/or alkoxy. Preferred perfluoroalkylalkyl radicals preferably comprise perfluoroalkyl moieties which range from CF₃ to C₃₀F₆₁, preferably C₆F₁₃ to C₁₆F₃₃, and most preferably C₈F₁₇ to C₁₀F₂₁. The alkyl moiety of the perfluoroalkylalkyl radical is preferably ethyl. Preferred radicals for X include chloro, bromo, iodo, methoxy, ethoxy and acetoxy radicals. Preferred perfluoroalkylethylsilanes in accordance with the present invention include perfluoroalkylethyltrichlorosilane, perfluoroalkylethyltrimethoxysilane, perfluoroalkylethyltriacetoxysilane, perfluoroalkylethyldichloro(methyl) silane and perfluoroalkylethyldiethoxy(methyl)silane.

These perfluoroalkylethylsilanes appear to react with bonding sites at the substrate surface on a molecular basis. Strong surface bonding of the perfluoroalkylethylsilanes produces a durable substrate surface which exhibits a high contact angle with a drop of water, indicating high water repellency. The perfluoroalkylalkyl silane composition may further comprise a hydrolyzable silane capable of hydrolytic condensation to form a silica gel which acts as an integral primer. Preferred hydrolyzable silanes include fully hydrolyzable organosilanes, such as tetrahalosilanes, particularly tetrachlorosilane, SiCl₄.

Suitable aprotic solvents are those with relatively high boiling points, preferably at least 65°C, and surface tensions greater than the surface free energy of the perfluoroalkylalkyl silane treated substrate surface by at least 5.10⁻⁵ N (5 dynes) per centimeter. The solvent may be a single solvent or a mixture of solvents, comprising at least one solvent for the perfluoroalkylalkyl silane and at least one solvent having the above properties. Also suitable are solvent mixtures which have at least one component which has a high boiling point, and either have fluid surface tensions which are at least 5.10⁻⁵ N/m (5 dynes/cm) greater than the perfluoroalkylalkyl silane treated substrate surface, or change by selective evaporation during treatment of the substrate surface until the surface tension of the fluid is at least 5.10⁻⁵ N/cm (5 dynes/cm) greater than the free energy of the perfluoroalkylalkyl silane treated substrate surface. Aprotic solvents and solvent systems include, those without -OH, -NH or -SH which can react with hydrolyzable groups on the perfluoroalkylalkyl silane, and have surface tensions greater than the surface free energy of the treated surface or are capable of selective evaporation to form a solvent system with a surface tension greater than the surface free energy of the treated surface.

Suitable solvents include high boiling, high surface tension solvents in the following families: normal, cyclic, and isoparaffinic alkanes such as hexane, heptane, cyclohexane, octane, hexadecane, and mixtures such as mineral spirits and Isopar solvents (product of Exxon); alkenes such as limonene; aromatic hydrocarbons such as toluene and xylenes; high boiling ethers such as n-butyl ether; ketones such as cyclopentanone, cyclohexanone, and methyl isobutyl ketone; halogenated hydrocarbons such as trichloroethane and chlorobenzene. Suitable solvents, particularly in solvent mixtures, may include isopropanol, ethanol, hexane, heptane, mineral spirits, acetone, toluene, and naphtha. Preferred solvents are high boiling alkanes, such as octanes, decanes, dodecanes and mixtures thereof; halogenated hydrocarbon solvents such as trichlorotrifluoroethane and methylene chloride; and perfluorinated organic compounds such as perfluorocarbons. Preferred solvents, for shipping considerations, are those without flash points or with flash points above 60°C (140°F). Preferred solvents include 1,1,1-trichloroethane, alkanes such as dodecane and hexadecane, and commercially available mixtures such as Isopar solvents, grades L, M, and V, from Exxon Corp. In all cases, the solvent or one component of the solvent mixture, at least 1 percent in concentration, is of sufficiently high boiling point so as not to evaporate within about one minute of coating application.

Some suitable solvents, along with their surface tension, boiling temperature and flash point properties are listed in the following Table.

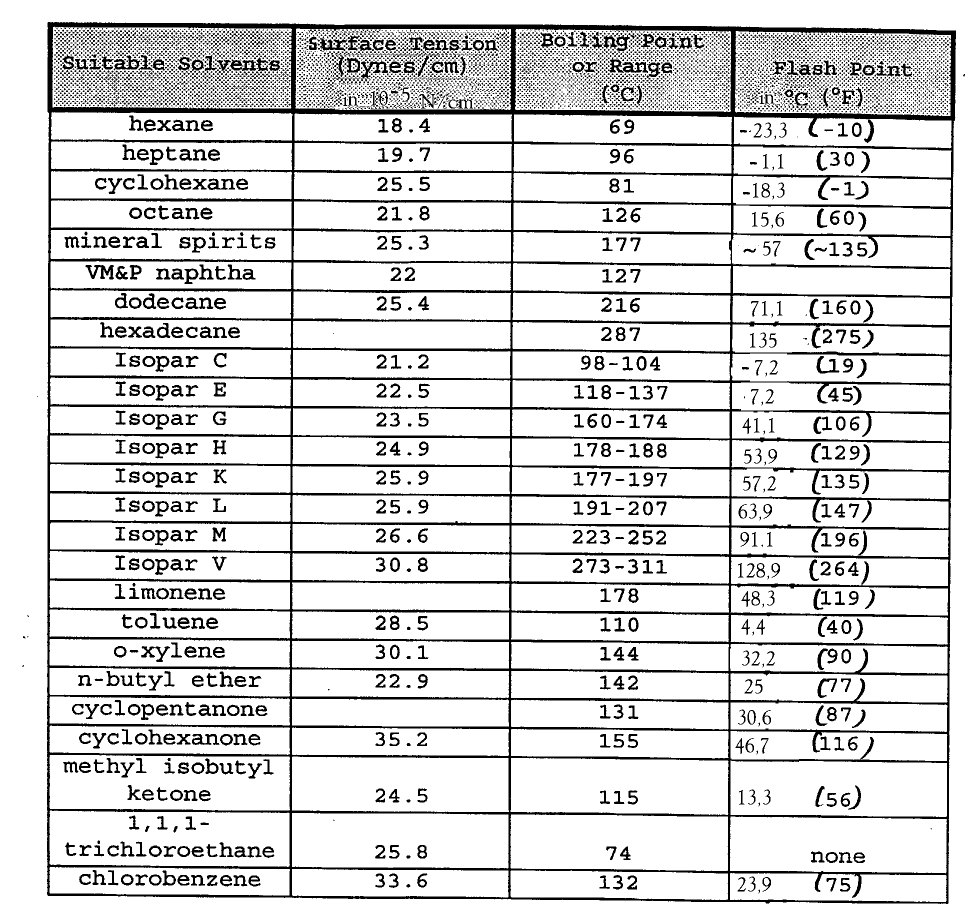

If the perfluoroalkylalkyl silane comprises readily hydrolyzable groups, such as chloro, the solvent preferably excludes water and alcohols such as ethanol and isopropanol, which can react with the perfluoroalkylalkyl silane, leaving it less capable of reacting with the substrate surface. For the particularly preferred perfluoroalkylalkyl silanes, such as the perfluoroalkylalkyl dichloro- and trichloro-silanes, the solvent or solvent mixture is preferably anhydrous. Solvents may be passed through conventional drying agents such as anhydrous, magnesium sulfate or silica gel. Various preferred solvents, such as the high boiling alkanes, may include a reactive drying agent, such as thionyl chloride, to remove any trace of water which would otherwise react with the perfluoroalkylalkyl silane.

Thionyl chloride (SOCl₂) is a member of a class of reactive drying agents. Most drying agents work by complexing water present in the solvent. The water is still present in systems that rely on complexation. Reactive drying agents, for the instant invention, are those that react with the water to form other compounds which do not contain water and preferably do not produce other -OH containing moieties that are reactive with chlorosilanes. Other reactive drying agents include sulfur monochloride (S₂Cl₂), phosphorus pentachloride (PCl₅) sulfuryl chloride (SO₂Cl₂), and phosphorus trichloride (PCl₃).

Concentrations of 0.005 to 50, preferably 0.05 to 5, percent of perfluoroalkylalkyl silane in the solvent or solvent mixture are preferred. The composition is preferably applied to the substrate surface by wiping, dipping or spraying followed by removal by air blow off, gravity draining or wiping while some of the composition remains on the treated surface in a form which is repelled by the treated surface due to the remaining solvent having a surface tension at least 5.10⁻⁵ N/cm (5 dynes/cm) greater, than the surface free energy of the treated surface. This retraction of the solvent from the treated surface provides for easy pickup and removal of the remaining composition without deposition of a thin film of excess perfluoroalkylalkyl silane component which forms a haze which may be difficult to remove, and which may require more time and effort to remove than the time required for application of the composition.

After any remaining solvent is evaporated, preferably simply by drying in air at ambient temperature, the perfluoroalkylalkyl silane is cured to form a more durable coating. Preferably, curing is accomplished by heating the perfluoroalkylalkyl silane treated surface. Typically, curing temperatures of at least about 66°C (150°F) are preferred, particularly above about 93°C (200°F). A cure cycle of about about 93°C (200°F) for about 30 minutes is suitable. Higher temperatures and shorter heating times may be more efficient. A cure cycle of 2 to 5 minutes at about 204 to 260°C (400 to 500°F) may be preferred, particularly about 3 minutes at about 243°C (470°F).

The contact angles recited herein are measured by the sessile drop method using a modified captive bubble indicator manufactured by Lord Manufacturing, Inc., equipped with Gaertner Scientific Goniometer optics. The surface to be measured is placed in a horizontal position, facing upward, in front of a light source. A drop of water is placed on top of the surface in front of the light source so that the profile of the sessile drop can be viewed and the contact angle measured through the goniometer telescope equipped with circular protractor graduation.

### DESCRIPTION OF THE DRAWING

Figure 1 illustrates the contact angle of a liquid drop as a function of solvent surface tension in dynes per centimeter on substrates having various surface free energies, measured in dynes per centimeter.

Figure 2 illustrates the contact angle of a liquid drop as a function of surface free energy in dynes per centimeter of various fluids, the surface tensions of which are measured in dynes per centimeter.

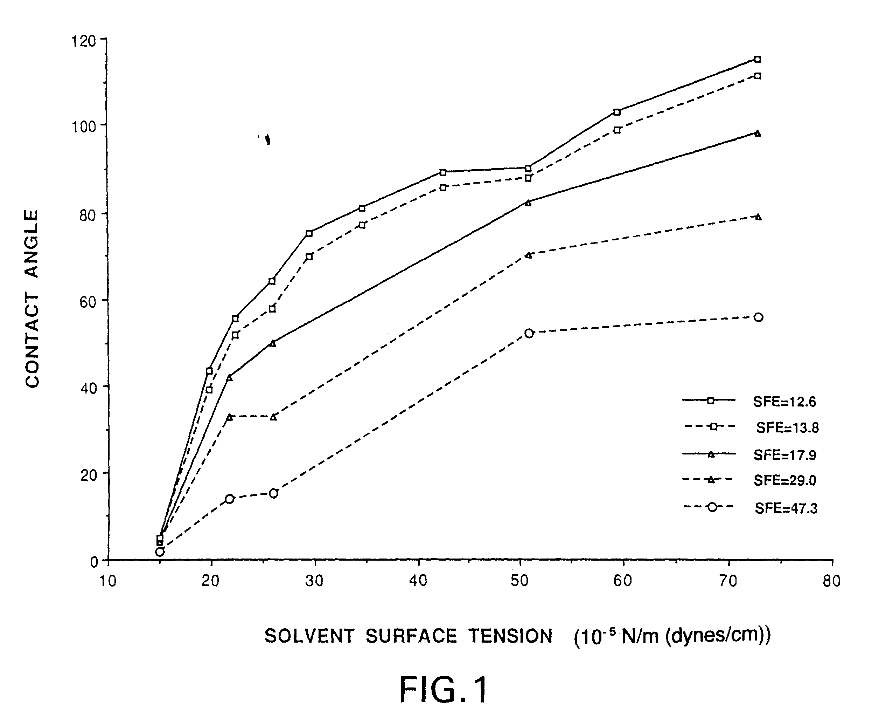

Figure 1 shows that fluids with very low surface tension, such as perfluorocarbons, can easily wet the treated surfaces, even the most repellent. During the application of perfluoroalkylethyltrichlorosilane coatings by wiping, the surface free energy is generally lowered from about 73.10⁻⁵ N/cm (73 dynes/cm) for the glass surface to about 12.10⁻⁵ N/cm (12 dynes/cm) for the perfluoroalkylalkyl silane treated glass surface. During this time, a solvent system with a constant surface tension of 20 to 70.10⁻⁵ N/cm (20 to 70 dynes/cm) shows initial wetting of the surface followed by de-wetting after the surface has been partially coated. Figure 1 illustrates that by choosing a solvent surface tension and moving from the x-axis upward, as the coating is applied and the surface free energy is lowered, the contact angle of the solvent on the coating increases.

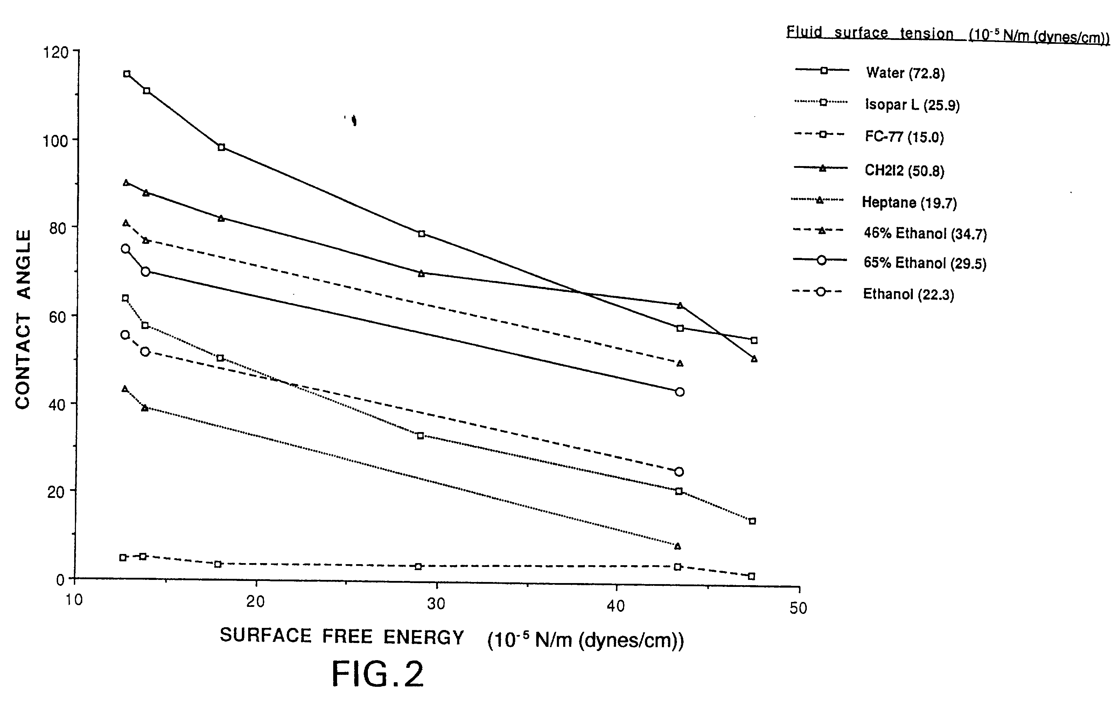

Figure 2 illustrates more clearly that for a surface modified to be more repellent, fluids with surface tension greater than about 20.10⁻⁵ N/cm (20 dynes/cm) become repelled by the surface, while fluid with a surface tension of about 15.10⁻⁵ N/cm (15 dynes/cm) still have a low contact angle. Higher contact angles reduce the evaporation rate of solvents due to "beading up" which reduces the surface area of the drop which, in turn, reduces the evaporation rate of the solvent. Also, as the solvent beads, the surface repels the solvent more, which allows a paper towel to remove the solvent cleanly from the surface.

The present invention will be further understood from the descriptions of specific examples which follow.

### EXAMPLE 1

A first coating solution is prepared comprising 1.2 percent by weight perfluoroalkylethyltrichlorosilanes, wherein the alkyl comprises primarily C₆ to C₁₈ chain lengths, in a solvent system comprising equal weights of Freon® TF trichlorotrifluoroethane (Freon is a registered trademark of DuPont) and hexadecane. A second coating solution is prepared as above except that the solvent consists entirely of Freon TF. These two solutions were used to render float glass samples water repellent by a simple wiping procedure. During application of the two solutions, the second coating solution wiped onto the glass surface like wax, and left a film of excess material, while the first coating solution, within a short time of application, was repelled from the treated surface sufficiently to cause the solution to "bead up"; the hexadecane did not readily evaporate due to its high boiling point. The "beaded up" first solution was readily removed by simple wiping. Removal of the excess material from the second coating solution required solvent, extra towels and considerable buffing effort.

The surface treated glass coupons were exposed to condensing humidity in the Cleveland Condensing Cabinet (CCC), constantly condensing water vapor at 60°C (140°F). The efficiency of the treatment is measured by the contact angle formed by a drop of water on the surface. The results are reported in the following table.

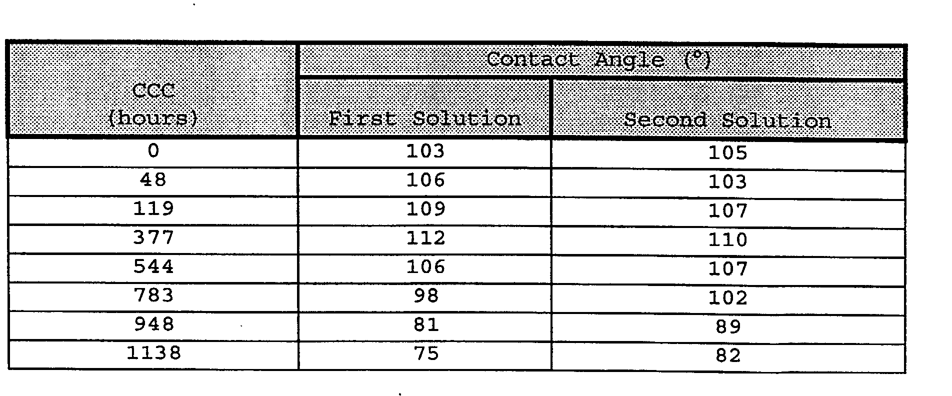

The above results indicate similar durability of the coating provided by the two formulations. However, the first solution was significantly easier to apply due to the repellent nature of the treated surface once the low surface tension, low boiling component (Freon TF) evaporated.

### EXAMPLE 2

Several glass coupons were coated with coating solutions to render the glass hydrophobic. Each coating solution was based upon the same perfluoroalkylethyltrichlorosilanes as used in Example 1, but solvents and concentrations were varied. Some of the samples were weathered in outdoor Pittsburgh exposure inclined 45° to horizon, facing south. The treated coupons were evaluated by the contact angles of various solvents on these treated surfaces. The surface free energy (SFE) was calculated by the use of the contact angles of methylene iodide and water for each glass surface, as described by Owens and Wendt (J. Appl. Poly. Sci. 1969, 13, 1741). The most repellent treated surfaces are those represented by low surface free energies, such as 12.10⁻⁵ N/cm (12.6 dynes/cm). The most weathered treated surface has the highest surface free energy, 47,3.10⁻⁵ N/cm (47.3 dynes/cm); this treated surface is still significantly repellent to water, exhibiting a contact angle of 56°. The contact angle data are illustrated in Figures 1 and 2.

### EXAMPLE 3

Four solutions were prepared as follows. Solution A was prepared by dissolving 0.5 weight percent each of silicon tetrachloride and perfluorooctylethyltrichlorosilane in Isopar L solvent, a mixture of hydrocarbons available from Exxon Corp., which has a surface tension of 25.9.10⁻⁵ N/cm (25,9 dynes/cm) and a boiling temperature range of 191 to 207°C. Solution B was prepared by dissolving 0.5 weight percent each of silicon tetrachloride and perfluorooctylethyltrichlorosilane in Fluorinert FC-77, a fluorinated solvent available from 3M Corp., which has a surface tension of 15.10⁻⁵ N/cm (15.0 dynes/cm) and a boiling point of 97°C. Solution C was prepared by dissolving 0.5 weight percent perfluorooctylethyltrichlorosilane in Isopar L, and Solution D was prepared by dissolving 0.5 weight percent perfluorooctylethyltrichlorosilane in Fluorinert FC-77. Each solution was wiped on glass coupons, which had been polished with an alumina polishing agent to obtain a clean surface, at 17°C (63°F) and approximately 70 percent relative humidity. The amount of haze was measured with a Pacific Scientific XL211 Hazegard System. Haze levels of 0.0 to 0.1 percent are generally not observable with the unaided eye, and treated substrates with this level of haze can be considered clear for normal viewing purposes. The haze values of glass treated with the four solutions are listed below:

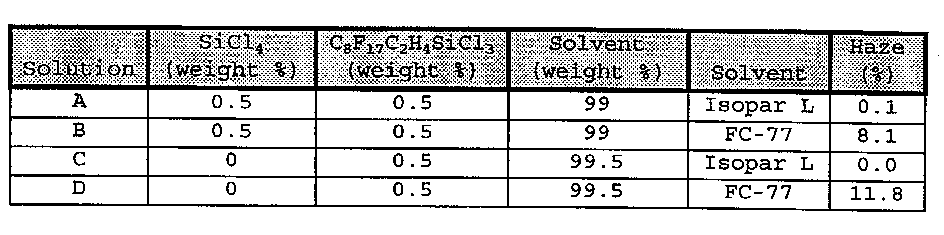

As can be seen from the above data, solutions B and D which used low boiling point fluorocarbon solvent (Fluorinert FC-77) had significant haze levels, while solutions A and C which used high boiling point hydrocarbon solvent (Isopar L) did not. The higher boiling point and higher surface tension of the hydrocarbon solvent (Isopar L) resulted in this significant difference in haze.

### EXAMPLE 4

A solution was prepared comprising 99 grams of high boiling point hydrocarbon solvent (Isopar L), 0.5 grams of thionyl chloride (SOCl₂), and 0.5 grams of perfluoroalkylethyltrichlorosilanes, wherein the perfluoroalkyl moiety comprises primarily C₆F₁₃ to C₁₈F₃₇. This solution was used to render float glass water repellent by a simple wiping procedure. During application of the solution, the solution was repelled sufficiently to cause the solution to "bead up" and be easily removed from the surface without deposition of observable excess siloxane material. The thionyl chloride was used to dry the hydrocarbon solvent. The surface treated glass coupons were exposed to condensing humidity in the Cleveland Condensing Cabinet (CCC), constantly condensing water vapor at 60°C (140°F), and also exposed to cyclic UV light and humidity in a QUV Tester, with cycles of 8 hours UV at low relative humidity at a black panel temperature of 65°C followed by 4 hours of near 100 percent relative humidity at 50°C. The efficiency of the perfluoroalkylalkyl silane surface treatment is measured by the contact angle formed by a drop of water on the treated substrate surface. The results are reported in the following table:

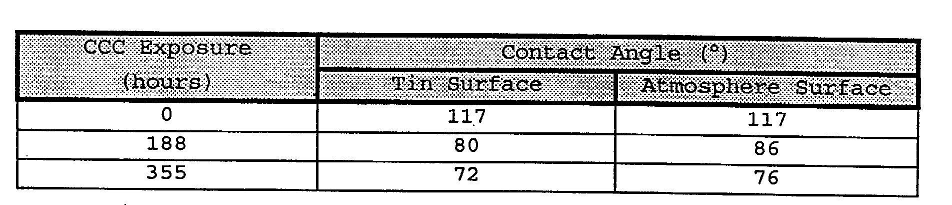

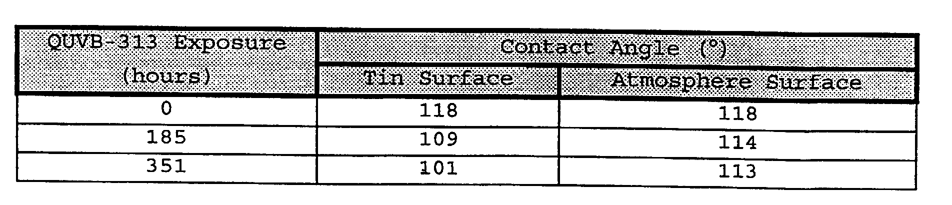

The above examples are offered to illustrate the present invention. Various perfluoroalkylalkyl silanes, organosilanes, solvents and concentrations may be applied by any conventional technique, and optionally cured at suitable temperatures for adequate times to provide durable non-wetting surfaces to any of a variety of glass and plastic substrates, as well as other inorganic surfaces such as metals, ceramics, enamels, and metal or metal oxide films. The treated substrates of the present invention are especially suitable in automobile and other vehicle, including aircraft, parts, as well as in building components, antireflective lenses and CRT cover plates.

## Claims

1. A method of producing a non-wetting surface on a substrate by contacting at ambient temperature the surface with a composition comprising:
(i) a perfluoroalkylalkyl silane selected from compounds having the general formula RₘR'ₙSi₄₋ₘ₋ₙ, wherein R is a perfluoroalkylalkyl radical, R' is an alkyl or vinyl radical, m is 1, n is 0 or 1. m+n is not greater than 3, and X is selected from the group consisting of halogen, alkoxy and acyloxy radicals, and
(ii) at least, one aprotic solvent having a surface tension at least 5.10⁻⁵ N (5 dynes) per centimeter higher than the surface free energy of the perfluoroalkylalkyl silane treated substrate surface and a boiling point of at least 65°C and the solvent is selected from the group consisting of alkanes, alkenes, aromatic hydrocarbons, ethers, ketones, halogenated hydrocarbons, perfluorocarbons or mixtures thereof, and the solvent or one component of a solvent mixture at least one percent in concentration is of sufficiently high boiling point so as not to evaporate within about one minute after application of the composition,
until the treated surface becomes sufficiently non-wetting to repel the remaining composition and removing an excess of the composition and evaporating any remaining solvent.

2. The method of claim 1, wherein the perfluoroalkylalkyl silane is cured by heating the treated surface to a temperature of at least 66°C (150°F).

3. The method according to claim 1, wherein contacting and wetting of the substrate surface with the composition is done for 0.2 to 2 seconds to repel the remaining composition.

4. The method according to claim 1, wherein the perfluoroalkyl moiety of said perfluoroalkylalkyl radical of the silane is selected from the group consisting of CF₃ to C₃₀F₆₁.

5. The method according to claim 4, wherein said perfluoroalkyl moiety is selected from the group consisting of C₆F₁₃ to C₁₈F₃₇.

6. The method according to claim 5, wherein said perfluoroalkyl moiety is selected from the group consisting of C₈F₁₇ to C₁₂F₂₅.

7. The method according to claim 1, wherein R' of the silane is selected from the group consisting of methyl, ethyl, vinyl and propyl.

8. The method of claim 1, wherein X of the silane is selected from the group consisting of chloro, bromo, iodo, methoxy, ethoxy and acetoxy.

9. The method of any of claims 1 to 8, wherein the composition further comprising a fully hydrolyzable organosilane capable of hydrolytic condensation to form a silica gel.

## Patentansprüche

1. Verfahren zum Erzeugen einer nichtbenetzenden Oberfläche auf einem Träger durch Inberührungbringen der Oberfläche bei Umgebungstemperatur mit einer Zusammensetzung, enthaltend:
(i) ein Perfluoralkylalkylsilan, ausgewählt aus Verbindungen der allgemeinen Formel RₘR'ₙSiX₄₋ₘ₋ₙ, in der R ein Perfluoralkylalkylrest ist, R' ist ein Alkyl- oder Vinylrest, m ist 1, n ist 0 oder 1, m+n ist nicht größer als 3, und X ist aus der aus Halogen-, Alkoxy- und Acyloxyresten bestehenden Gruppe ausgewählt, und
(ii) mindestens ein aprotisches Lösemittel mit einer Oberflächenspannung, die mindestens 5x10⁻⁵ N (5 Dyn) pro Zentimeter größer ist als die freie Oberflächenenergie der mit Perfluoralkylalkylsilan behandelten Trägeroberfläche, und einem Siedepunkt von mindestens 65° C, und das Lösemittel ist aus der aus Alkanen, Alkenen, aromatischen Kohlenwasserstoffen, Ethern, Ketonen, halogenierten Kohlenwasserstoffen, Perfluorkohlenstoffen oder Mischungen derselben ausgewählt, und das Lösemittel oder ein Bestandteil einer Lösemittelmischung in einer Konzentration von mindestens einem Prozent weist einen ausreichend hohen Siedepunkt auf, so daß es nicht innerhalb etwa einer Minute nach dem Aufbringen der Zusammensetzung verdampft, bis die behandelte Oberfläche ausreichend nichtbenetzend wird, um die verbleibende Zusammensetzung abzustoßen, und Entfernen der überschüssigen Zusammensetzung und Verdampfen allen verbleibenden Lösemittels.

2. Verfahren nach Anspruch 1, bei dem das Perfluoralkylalkylsilan durch Erwärmen der behandelten Oberfläche auf eine Temperatur von mindestens 66° C (150° F) gehärtet wird.

3. Verfahren nach Anspruch 1, bei dem das Inberührungbringen und Benetzen der Trägeroberfläche mit der Zusammensetzung 0,2 bis 2 Sekunden lang erfolgt, um verbleibende Zusammensetzung abzustoßen.

4. Verfahren nach Anspruch 1, bei dem die Perfluoralkylgruppe des Perfluoralkylalkylrestes des Silans aus der aus CF₃ bis C₃₀F₆₁ bestehenden Gruppe ausgewählt ist.

5. Verfahren nach Anspruch 4, bei dem die Perfluoralkylgruppe aus der aus C₆F₁₃ bis C₁₈F₃₇ bestehenden Gruppe ausgewählt ist.

6. Verfahren nach Anspruch 5, bei dem die Perfluoralkylgruppe aus der aus C₈F₁₇ bis C₁₂F₂₅ bestehenden Gruppe ausgewählt ist.

7. Verfahren nach Anspruch 1, bei dem R' des Silans aus der aus Methyl, Ethyl, Vinyl und Propyl bestehenden Gruppe ausgewählt ist.

8. Verfahren nach Anspruch 1, bei dem X des Silans aus der aus Chlor, Brom, Iod, Methoxy, Ethoxy und Acetoxy bestehenden Gruppe ausgewählt ist.

9. Verfahren nach einem der Ansprüche 1 bis 8, bei dem die Zusammensetzung weiterhin ein vollständig hydrolysierbares Organosilan enthält, das zur Ausbildung eines Kieselsäuregels durch hydrolytische Kondensation fähig ist.

## Revendications

1. Procédé de production d'une surface non mouillante sur un substrat par la mise en contact à température ambiante de la surface avec une composition comprenant:
(i) un perfluoroalkylalkyl silane choisi parmi les composés répondant à la formule générale RₘR'ₙSiX₄₋ₘ₋ₙ, dans laquelle R est un radical perfluoroalkylalkyle, R' est un radical alkyle ou vinyle, m est égal à 1, n est égal à 0 ou 1, m+n n'est pas supérieur à 3, et X est choisi dans le groupe comprenant les radicaux halogène, alcoxy et acyloxy, et
(ii) au moins un solvant aprotique ayant une tension superficielle d'au moins 5•10⁻⁵N (5 dynes) par centimètre plus élevée que l'énergie libre superficielle de la surface du substrat traitée au perfluoroalkylalkyl silane et un point d'ébullition d'au moins 65°C et le solvant est choisi dans le groupe comprenant les alcanes, alcènes, hydrocarbures aromatiques, éthers, cétones, hydrocarbures halogénés, perfluorocarbones et leurs mélanges, et le solvant ou un composant d'un mélange de solvants d'au moins un pourcent en concentration est d'un point d'ébullition suffisamment élevé de manière à ne pas s'évaporer dans les limites d'environ une minute après l'application de la composition,
jusqu'à ce que la surface traitée devienne suffisamment non mouillante pour repousser la composition restante, et l'enlèvement d'un excès de la composition et l'évaporation de tout solvant restant.

2. Procédé suivant la revendication 1, dans lequel le perfluoroalkylalkyl silane est durci en chauffant la surface traitée à une température d'au moins 66°C (150°F).

3. Procédé suivant la revendication 1, dans lequel la mise en contact et le mouillage de la surface du substrat avec la composition sont réalisés pendant 0,2 à 2 secondes pour chasser la composition restante.

4. Procédé suivant la revendication 1, dans lequel le fragment perfluoroalkyle du radical perfluoroalkylalkyle du silane est choisi dans le groupe comprenant les CF₃ à C₃₀F₆₁.

5. Procédé suivant la revendication 4, dans lequel le fragment perfluoroalkyle est choisi dans le groupe comprenant les C₆F₁₃ à C₁₈F₃₇.

6. Procédé suivant la revendication 5, dans lequel le fragment perfluoroalkyle est choisi dans le groupe comprenant les C₈F₁₇ à C₁₂F₂₅.

7. Procédé suivant la revendication 1, dans lequel R' du silane est choisi dans le groupe comprenant les radicaux méthyle, éthyle, vinyle et propyle.

8. Procédé suivant la revendication 1, dans lequel X du silane est choisi dans le groupe comprenant les radicaux chloro, bromo, iodo, méthoxy, éthoxy et acétoxy.

9. Procédé suivant l'une quelconque des revendications 1 à 8, dans lequel la composition comprend de plus un organosilane totalement hydrolysable capable d'une condensation hydrolytique pour former un gel de silice.
